# EUROPÄISCHE PATENTSCHRIFT

(11) **EP 0 532 865 B1**
(45) Veröffentlichungstag und Bekanntmachung des Hinweises auf die Patenterteilung: **27.12.1996**
(21) Anmeldenummer: 92112895.5
(22) Anmeldetag: 29.07.1992
(51) Int. Cl.: D06H 7/22, B29C 65/08

(54) **Vorrichtung zum Schneiden einer Textilbahn, insbesondere einer Etikettenbahn**
Apparatus for cutting a textile web, especially a labelband
Dispositif pour couper une bande textile, en particulier une bande d'étiquettes

(30) Priorität: 20.09.1991 CH 2799/91
(43) Veröffentlichungstag der Anmeldung: 24.03.1993
(73) Patentinhaber: Textilma AG, CH-6052 Hergiswil (CH)
(72) Erfinder: Specih, Francisco, CH-5264 Gipf-Oberfrick (CH); Liechti, Peter, CH-5265 Wittnau (CH)
(74) Vertreter: Schmauder, Klaus Dieter

(56) Entgegenhaltungen:
- FR-A- 2 313 186
- FR-A- 2 444 110
- US-A- 3 555 945
- US-A- 3 836 413
- US-A- 3 852 144
- US-A- 4 662 037
- MELLIAND TEXTILBERICHTE Bd. 70, Nr. 4, April 1989, HEIDELBERG DE Seiten 263 - 265 F. RICHTER 'Ultraschall-Schneiden und -Schweissen in der Textilindustrie'

## Beschreibung

Die Erfindung betrifft eine Vorrichtung gemäss Oberbegriff des Anspruches 1.

Eine Vorrichtung der eingangs genannten Art ist aus der AT-B-364 342 bekannt. Die Vorrichtung enthält ein einstückiges Werkzeug, das einen ersten als Vorverdichter wirkenden Abschnitt und einen zweiten als Schneidmesser ausgebildeten Abschnitt aufweist. Durch die starre Zuordnung von Vorverdichter und Schneidmesser sind nur Textilbahnen mit praktisch gleichbleibender Dicke schneidbar. Die Vorrichtung ist für Textilbahnen, wie insbesondere Etikettenbahnen mit wechselnden Dicken ungeeignet.

Die US-A-3 852 144 beschreibt das gleichzeitige Verschweissen und Schneiden einer zweilagigen Materialbahn an verschiedenen Arbeitsstellen mittels einer Ultraschallvorrichtung mit zwei parallel angeordneten Werkzeugen. Eine Vorverdichtung eines zu schneidenden Bereiches kann der Druckschrift nicht entnommen werden.

Aufgabe der Erfindung ist es, eine Vorrichtung der eingangs genannten Art zu verbessern.

Die gestellte Aufgabe wird durch die kennzeichnenden Merkmale des Anspruches 1 gelöst.

Dadurch, dass das Schneidmesser und der Vorverdichter einzeln gegen die Sonotrode einstellbar vorspannbar sind, kann sich der Vorverdichter der schwankenden Dicke einer Textilbahn, insbesondere einer Etikettenbahn, anpassen und damit nicht nur das Abheben des Schneidmessers verhindern, sondern auch die Textilbahn hinsichtlich wechselnder Dicken mittels der Vorverdichtung vergleichmässigen. Dem Schneidmesser wird dadurch eine Textilbahn mit verminderter Dickenschwankung vorgelegt, wodurch ein optimaler Schnitt möglich ist.

Vorteilhafte Ausbildungen der Vorrichtung sind in den Ansprüchen 2 bis 4 beschrieben.

Die Vorspannung kann beispielsweise mittels pneumatischer Kolben/Zylinder-Aggregate aufgebracht werden oder vorzugsweise mittels Federn.

Besonders zweckmässig ist eine Ausgestaltung der Vorrichtung nach Anspruch 2 und insbesondere die Weiterbildung nach Anspruch 3. Durch die Anpassung der Schneidparameter an die momentane Dicke der Textilbahn wird der Schneidvorgang weiter verbessert. Als Dickenmesser können beispielsweise Sensoren nach Anspruch 4 verwendet werden. Die Vorrichtung kann grundsätzlich so eingestellt werden, dass das Schneidmesser die Textilbahn nicht vollständig trennt sondern eine Bruchnaht belässt, längs der die Textilbahn später von Hand getrennt werden kann. Vorteilhafter ist die Vorrichtung jedoch so eingestellt, dass eine vollständige Trennung der Textilbahn erfolgt.

Ausführungsbeispiele der erfindungsgemässen Vorrichtung werden nachfolgend anhand schematischer Zeichnungen näher beschrieben, dabei zeigen:
- Figur 1: eine Schneidvorrichtung in Seitenansicht parallel zur Laufrichtung der Textilbahn;
- Figur 2: die Vorrichtung der Figur 1 im Schnitt II-II;
- Figur 3: den Schneidkopf der Figur 1 in grösserem Massstab;
- Figur 4: den Vorverdichter im Schnitt IV-IV der Figur 3;
- Figur 5: das Schneidmesser der Figur 3 im Schnitt V-V der Figur 3; und
- Figur 6: ein mit der Vorrichtung gemäss Figur 1 geschnittenes Band unterschiedlicher Dicke.

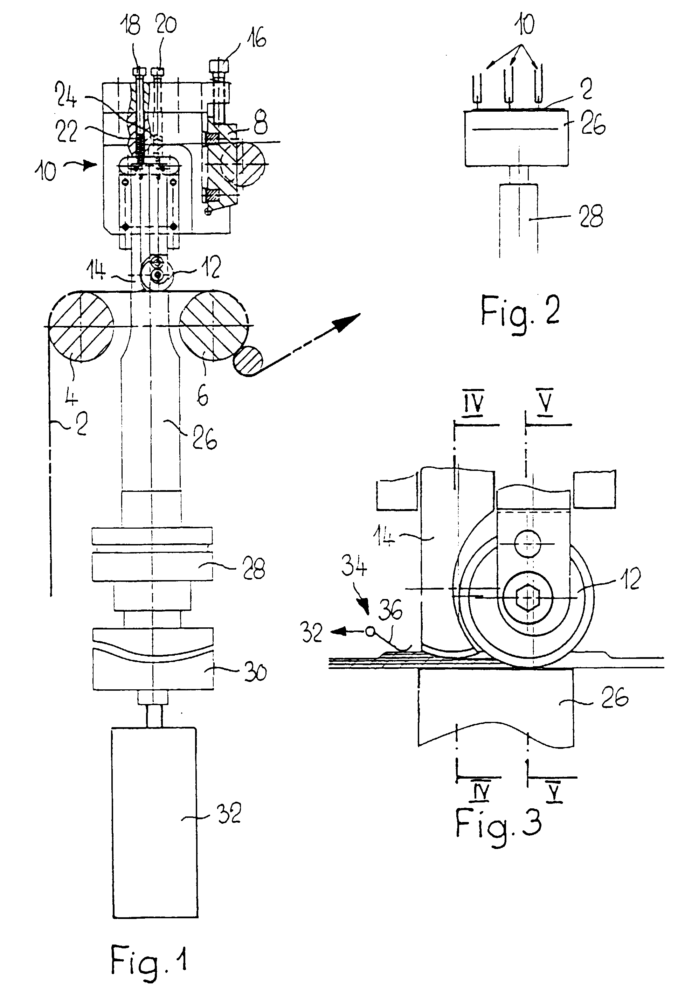

Die Figur 1 zeigt eine Vorrichtung zum Schneiden einer Textilbahn 2, die über Umlenkrollen 4,6 geführt ist. Ueber der Textilbahn ist ein an einem Querträger 8 verfahrbarer Schneidkopf 10 angeordnet. Letzterer enthält ein Schneidmesser 12 und einen diesem vorverlagerten Vorverdichter 14. Der Schneidkopf 10 ist am Querträger 8 hin und her verfahrbar angeordnet und mittels einer Klemmschraube 16 festlegbar. Stellschrauben 18,20 dienen zum Zustellen des Vorverdichters 14 und des Schneidmessers 12 gegen die Textilbahn 2 bzw. der darunter angeordneten Sonotrode 26. Federn 22,24 deren Federkraft einstellbar ist, dienen zur Erzeugung einer elastischen Gegenkraft des Vorverdichters und des Schneidmessers für die Sonotrode 26. Letztere ist über einem Booster 28 angeordnet, der seinerseits mit einem Konverter 30 verbunden ist. An letzterem ist ein Generator 32 angeschlossen. Der Generator erzeugt elektrische Energie im Ultraschallbereich und steuert den Zyklusablauf der Schneidvorrichtung. Der nachgeschaltete Konverter wandelt die vom Generator zugeführte Ultraschallenergie in mechanische Schwingungen um. Diese werden in der Sonotrode verstärkt und den Vorverdichtern bzw. den Schneidmessern zugeleitet. Mit dem Generator 32 ist ein Dickenmesser 34 verbunden, der beispielsweise als optischer, elektronischer oder mechanischer Sensor ausgebildet ist. Der Dickenmesser misst die momentane Dicke d₁ bzw. d₂ der zu schneidenden Textilbahn, um die Frequenz und/oder die Amplitude der Sonotrode entsprechend der Dicke der Textilbahn anzupassen, um einen optimalen Schnitt zu erhalten.

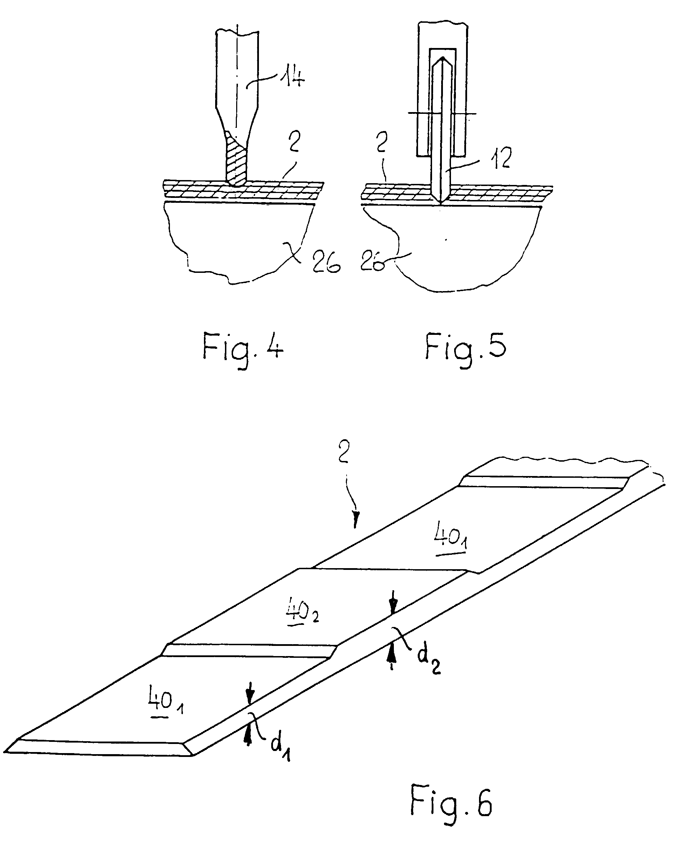

Mittels des Vorverdichters werden beispielsweise die zahlreichen Musterfäden, die im Figurbereich einer Textilbahn vorhanden sind und diese besonders dick werden lassen, vorverdichtet und vorverfestigt, wie dies in Figur 4 gezeigt ist. Dadurch ergibt sich dann eine einheitliche Schneidtiefe, so dass gemäss Figur 5 ein einwandfreier Schnitt erzielt werden kann.

Mit Hilfe der vorliegenden Schneidvorrichtung lassen sich auch bei stark gemusterten Textilbahnen, wie insbesondere Etikettenbahnen Etikettenbänder mit einwandfreier Schnittkante 38 herstellen, die sowohl in einem ungemusterten, d.h. dünnen Bereich 40₁ mit der Dicke d₁ einen ebenso einwandfreien und ausriffelfesten Schnitt liefern wie im stark gemusterten Bereich 40₂ mit der Dicke d₂. Die Vorrichtung kann so eingestellt werden, dass die Textilbahn nicht vollständig durchtrennt wird, sondern eine Reisskante verbleibt, mittels der die Textilbahnen, insbesondere Bänder, jederzeit von Hand getrennt werden können.

### BEZUGSZEICHENLISTE

- d₁: Dicke
- d2₂: Dicke
- 2: Textilbahn
- 4: Umlenkrolle
- 6: Umlenkrolle
- 8: Querträger
- 10: Schneidkopf
- 12: Schneidmesser
- 14: Vorverdichter
- 16: Klemmschraube
- 18: Stellschraube
- 20: Stellschraube
- 22: Feder
- 24: Feder
- 26: Sonotrode
- 28: Booster
- 30: Konverter
- 32: Generator
- 34: Dickenmesser
- 36: Sensor
- 38: Schnittkante
- 40₁: ungemusterter Bereich
- 40₂: gemusterter Bereich

## Patentansprüche

1. Vorrichtung zum Schneiden einer Textilbahn, insbesondere einer Etikettenbahn, mit einer Ultrasonic-Schneideinheit, die mindestens ein Schneidmesser (12) mit einem zugeordneten Vorverdichter (14) aufweist, die mit einer gemeinsamen Sonotrode (26) zusammenwirken, dadurch gekennzeichnet, dass das Schneidmesser (12) und der Vorverdichter (14) einzeln gegen die Sonotrode (26) vorspannbar sind, wobei die Vorspannung einstellbar ist.

2. Vorrichtung nach Anspruch 1, dadurch gekennzeichnet, dass die Amplitude und/oder die Frequenz der Sonotrode (26) während des Schneidvorganges in Abhängigkeit von der momentanen Dicke (d₁,d₂) der zu schneidenden Textilbahn (2) einstellbar ist.

3. Vorrichtung nach Anspruch 1 oder 2, dadurch gekennzeichnet, dass sie einen dem Vorverdichter (14) und/oder dem Schneidmesser (12) zugeordneten Dickenmesser (34) für die Textilbahn (2) aufweist, der mit einer Steuervorrichtung (32) verbunden ist, um die Frequenz und/oder die Amplitude der Sonotrode (26) entsprechend der momentanen Dicke (d₁,d₂) der Textilbahn (2) einzustellen.

4. Vorrichtung nach Anspruch 3, dadurch gekennzeichnet, dass der Dickenmesser einen optischen, elektronischen oder mechanischen Sensor (36) aufweist.

## Claims

1. Apparatus for cutting a textile web, especially a label-band, with an ultrasonic cutting unit that includes at least a cutting knife (12) with an associated pre-compressor (14), which interact with a common sonotrode (26), characterised in that the cutting knife (12) and the pre-compressor (14) are individually preloadable against the sonotrode (26), the preload tension being adjustable.

2. Apparatus according to claim 1, characterised in that the amplitude and/or the frequency of the sonotrode (26) is adjustable during the cutting process in dependence of the momentary thickness (d₁,d₂) of the textile web (2) to be cut.

3. Apparatus according to claim 1 or 2, characterised in that it includes a thickness meter (34) for the textile web (2), which is associated with the pre-compressor (14) and/or the cutting knife (12), the thickness meter (34) being connected to a control device (32) for adjusting the frequency and/or the amplitude of the sonotrode (26) according to the momentary thickness (d₁,d₂) of the textile web (2).

4. Apparatus according to claim 1, characterised in that the thickness meter is equipped with an optical, electronical or mechanical sensor (36).

## Revendications

1. Dispositif pour couper une bande textile notamment une bande d'étiquettes à l'aide d'un dispositif de coupe à ultrasons, comportant au moins un couteau (12) auquel est associé un dispositif de précompression (14), de manière à coopérer avec une sonotrode (26) commune,
caractérisé en ce que
les couteaux (12) et le dispositif de précompression (14) sont seuls à être précontraints contre la sonotrode (26), suivant une précontrainte réglable.

2. Dispositif selon la revendication 1,
caractérisé en ce que
l'amplitude et/ou la fréquence de la sonotrode (26) sont réglées pendant l'opération de coupe en fonction de l'épaisseur instantanée (d₁, d₂) de la bande textile (2) à couper.

3. Dispositif selon la revendication 1 ou 2,
caractérisé en ce que
il comprend un dispositif de précompression (14) et/ou un dispositif de mesure d'épaisseur (34) associé au couteau (12) pour la bande textile' (2), ce dispositif étant relié à un dispositif de commande (32) pour régler la fréquence et/ou l'amplitude de la sonotrode (26) suivant l'épaisseur instantanée (d₁, d₂) de la bande textile (2).

4. Dispositif selon la revendication 3,
caractérisé en ce que
le dispositif de mesure d'épaisseur comporte un capteur (36) optique, électronique ou mécanique.
